Europäisches Patentamt

European Patent Office

Office européen des brevets

(19)

(11) Veröffentlichungsnummer: **0 075 909**

**A2**

(12) **EUROPÄISCHE PATENTANMELDUNG**

(21) Anmeldenummer: 82108902.6

(22) Anmeldetag: 25.09.82

(51) Int. Cl.³: **G 11 B 27/34**

(30) Priorität: 26.09.81 DE 3138433
16.02.82 DE 3205489

(43) Veröffentlichungstag der Anmeldung:
06.04.83 Patentblatt 83/14

(84) Benannte Vertragsstaaten:
AT BE CH FR GB IT LI LU NL SE

(71) Anmelder: ASSMANN GmbH
Industriestrasse 5
D-6380 Bad Homburg(DE)

(72) Erfinder: Wölflick, Franz
Follerweg 46
D-6380 Bad Homburg v.d.H. 1(DE)

(72) Erfinder: Eckhof, Guido
Siesmayerstrasse 5
D-6000 Frankfurt/Main 1(DE)

(74) Vertreter: Reichel, Wolfgang, Dipl.-Ing. et al,
Reichel und Reichel Parkstrasse 13
D-6000 Frankfurt am Main 1(DE)

(54) Signalaufnahme- und/oder -wiedergabegerät zur Anzeige von Informationslängen.

(57) Die Erfindung betrifft eine Vorrichtung zur Anzeige von Informationslängen und verschiedener weiterer Daten auf einem Aufzeichnungsträger in einem Aufnahme/ Wiedergabegerät (1), das über eine Vorlauf-Rücklaufimpuls- leitung (12) mit einem Laufzeitzähler (3) verbunden ist. Von dem Aufnahme-/Wiedergabegerät (1) führt eine Zählimpuls- leitung (11) zu dem Laufzeitzähler (3). Von der Leitung (12) zweigt vor dem Laufzeitzähler (3) eine Leitung (13) zu einem Zwischenspeicher/Rechner (10) ab, der alle Daten speichert, aufsummiert und auf den Anfang des Aufzeichnungsträgers bezogen, für die Wiedergabe von diesem, umrechnet. Die im Zwischenspeicher/Rechner (10) enthaltenen Daten werden über eine Leitung (5) in einem Drucker (6) eingespeist, der einen Indexstreifen erstellt. Ein Schalter (2) des Gerätes (1) ist für die Kennzeichnung von Markierungsstopps vorgese- hen und ist über eine Leitung (14) mit dem Drucker (6) verbunden. Das Gerät (1) ist über eine Leitung (4) mit zwei in Reihe geschalteten Zeitgliedern (7, 8) verbunden, von denen das Zeitglied (7) den Laufzeitzähler (3) entsprechend den Rücklaufsignalen zurückstellt, während das Zeitglied (8) über eine Leitung (9) an den Laufzeitzähler (3) angeschlossen ist und diesen nach dem Zurücksetzen wieder startet. Des Weiteren ist ein Schalter (16) im Drucker, Zwischenspeicher/ Rechner oder am Aufnahme-/Wiedergabegerät vorgesehen, der über eine Leitung (17) das Aufnahme-/Wiedergabegerät in den Rücklauf versetzt.

Fig.1

ASSMANN GMBH, INDUSTRIESTRASSE 5, 6380 BAD HOMBURG v.d.H.1

Signalaufnahme- und/oder -wiedergabegerät zur Anzeige
von Informationslängen

Die Erfindung betrifft ein Signalaufnahme- und/oder
-wiedergabegerät zur Anzeige von Informationslängen, die
auf einem Aufzeichnungsträger aufgezeichnet und deren
Anfang und Ende durch Marken, Zeichen, Markierungen oder
dergleichen Informationen markiert sind, mit einer Abtasteinrichtung zum Abtasten des Aufzeichnungsträger in
dem Aufnahme- und/oder Wiedergabegerät und mit einer
Einrichtung zum Nachweis der aufgezeichneten Signale,
welche die Marken, Zeichen, Markierungen oder dergleichen
Informationen darstellen, Ein derartiges Gerät kann in
Diktiergerätsystemem, Anrufbeantwortern, Audio- und Videogeräten und dergleichen Anwendung finden.

Aus der DE-OS 2 717 198 ist eine Vorrichtung bekannt, die
eine Reihe von selektiv betätigbaren Lichtquellen sowie
einen Index- bzw. Schaltmechanismus umfaßt, mit dem die
Lichtquellen synchron mit der Abtastung des Aufzeichnungsträgers abgetastet werden, wobei der Schaltmechanismus
nacheinander mit jeder der Lichtquellen verbunden wird.
In einem Speicherkreis wird das Betätigungssignal so lange
gespeichert, bis der Schaltmechanismus mit einer nicht
eingeschalteten Lichtquelle in Verbindung gelangt, um
dann diese Lichtquelle in Betrieb zu setzen. Bei dieser
bekannten Vorrichtung ist die Schalteinrichtung, mit
deren Hilfe die erkannten Marken oder Anweisungen zur
Wiedergabe durch die Anzeigeeinheiten unter Berücksichtigung einer Bezugsstelle wiedergegeben werden, ein Schaltmechanismus und bis auf elektrische Schaltkontakte
mechanisch ausgeführt. Diese Anordnung ist bei einer
Störung nur aufwendig zu reparieren und weist wegen ihrer
mechanischen Teile Trägheiten auf, welche die Geschwindigkeit der Anzeige verlangsamen.

Aus der DE-AS 28 16 732 ist eine Vorrichtung zur Anzeige der Lage von besonderen Informationen, Marken oder Anweisungen auf einem Aufzeichnungsträger bekannt, bei der die Schalteinrichtung einen Laufzähler aufweist, dessen augenblicklicher Stand bei jeder durch eine Markenerkennungseinrichtung erkannten besonderen Information, Marke oder Anweisung in einem von mehreren Speichern festgehalten wird. Nach dem Auslesen des Aufzeichnungsträgers wird der Inhalt der Speicher in einem Mikroprozessor zur Wiedergabe eines Abbilds der Lage aller besonderen Informationen, Marken oder Anweisungen durch die selektiv betätigbaren Lichtquellen umgerechnet. Die Zuordnung der Informationen, Marken oder Anweisungen auf dem Aufzeichnungsträger zu den Lichtquellen können direkt als elektrische Größen weiterverarbeitet werden, ohne daß der Umweg über mechanische Größen gewählt werden muß. Durch die Vermeidung von mechanischen Bauelementen wird die Zuverlässigkeit gegenüber Geräten, die mit derartigen Baueinheiten ausgerüstet sind, wesentlich erhöht.

Bei dieser bekannten Vorrichtung werden die während der Aufnahme auf den Aufzeichnungsträger aufgezeichneten Markierungen in der Regel beim Rücklauf des Aufzeichnungsträgers, nach dem Ende der Übertragung auf den Anfang des Aufzeichnungsträgers, bei Verwendung eines Bandes auf dessen Anfang, zurückgerechnet, so daß beim Einlegen des Aufzeichnungsträgers für die Wiedergabe immer auf den definierten Anfang des Aufzeichnungsträgers automatisch Bezug genommen wird.

Der Erfindung liegt demgegenüber die Aufgabe zugrunde, sowohl bei der Aufnahme als auch bei der Wiedergabe von dem Aufzeichnungsträger eine Ziffernanzeige zur Verfügung gestellt zu bekommen, die Einzel- und Gesamtlänge von Vorgängen,das Auffinden bestimmter Textstellen, Datums- und Uhrzeitangaben innerhalb der Gesamtaufzeichnung ermöglicht.

Diese Aufgabe wird erfindungsgemäß durch die Merkmale des Anspruchs 1 gelöst.

In zweckmäßiger Ausgestaltung der Erfindung ist das Aufnahme-/Wiedergabegerät über eine Impulsleitung für die Vorlauf- und Rücklaufsignale und eine Zählimpuls-Leitung mit einem Laufzeitzähler, der ein Vorwärts- und Rückwärtszähler ist, verbunden und sind die Vorlauf- und Rücklaufsignale des Aufnahme-/Wiedergabegeräts über eine weitere Leitung, die von der Vorlauf-/Rücklaufimpulsleitung abzweigt, sowohl dem Zwischenspeicher/Rechner als auch dem Drucker zuführbar.

Vorteilhafterweise verbindet eine Leitung des Aufnahme-/Wiedergabegerät sowohl direkt als auch über ein erstes Zeitglied mit dem Laufzähler, und das Zeitglied stellt während des Rücklaufes des Diktier- und Wiedergabegeräts den Laufzeitzähler entsprechend den Rücklaufsignalen zurück. Dem ersten Zeitglied ist des weiteren ein zweites Zeitglied nachgeschaltet, das über eine Leitung mit dem Aufnahme-/Wiedergabegerät verbunden ist und dieses nach dem Zurücksetzen durch das erste Zeitglied erneut startet.

Die weitere Ausgestaltung der Erfindung ergibt sich aus den Ansprüchen 5 bis 11.

Durch die Zwischenschaltung eines Speichers zwischen dem Laufzeitzähler und dem Drucker können sowohl die Vorgangsgesamtzeit, Einzelvorgangszeiten und Vorgangsbeginn sowie

- 4 -

weitere Angaben, wie Datum und Uhrzeit, ausgedruckt werden. Mit der Erfindung wird der Vorteil erzielt, daß der Indexstreifen schon bei der Aufnahme oder nach Beendigung der Aufnahme noch vor Beginn der Wiedergabe vom Drucker des Aufnahme-/Wiedergabegeräts selbständig in digitaler Form erstellt wird. Der Rechner kann mit der Übernahme von Informationen an einer beliebigen Stelle des Aufzeichnungsträgers beginnen, so daß auch der Drucker an jeder beliebigen Stelle des Aufzeichnungsträgers mit dem Ausdrucken beginnen kann. Bevorzugt wird hierbei jedoch das Ende der Aufzeichnungen auf dem Aufzeichnungsträger, wobei nach Beendigung des Rücklaufes des Aufzeichnungsträgers alle aufgezeichneten Daten auf den definierten Anfang des Aufzeichnungsträgers umgerechnet sind, so daß auf dem Indexstreifen die Markierungsa stände und die Markierungspositionen, bezogen auf den Anfang des Aufzeichnungsträgers, ausgedruckt werden.

Alternativ können jedoch auch während des Rücklaufs die Zeichen so eingelesen und ausgedruckt werden, wie sie anfallen, wobei der Ausdruck der Zeichen auf dem Kopf stehend erfolgt. Am Ende des Rückspulvorganges wird zusätzlich noch die Gesamtlaufzeit ausgedruckt.

Im folgenden wird die Erfindung anhand eines in den Zeichnungen dargestellten Ausführungsbeispiels näher beschrieben. Es zeigen:

Figur 1 - ein Blockschaltbild einer Vorrichtung zur Anzeige von Informationslängen gemäß einer Ausführungsform der Erfindung, und
Figur 2a bis 2d - bedruckte Indexstreifen für das Aufnahme-/Wiedergabegerät während des Diktats, vor der Wiedergabe, bzw. für Einfügungen während der

Wiedergabe oder für den Ausdruck während des Rückspulens.

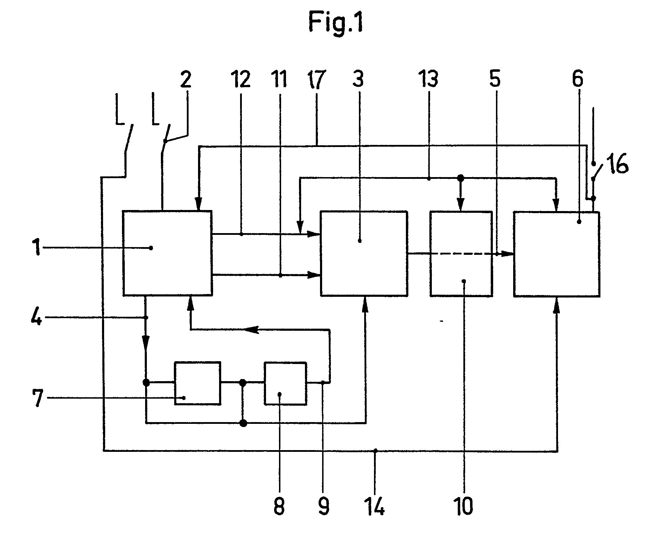

Wie Figur 1 zeigt, ist ein Aufnahme-/Wiedergabegerät 1 über eine Impulsleitung 12 für die Vorlauf- und Rücklaufsignale und über eine Zählimpuls-Leitung 11 mit einem Laufzeitzähler 3 verbunden, der als Vorwärts- und Rückwärtszähler ausgebildet ist. Das Aufnahme-/ Wiedergabegerät 1 enthält ein nicht im einzelnen gezeigtes Laufwerk für den Aufzeichnungsträger, beispielsweise ein Magnetband, das Umdrehungssignale abgibt, die bei Drehung der Aufwickel- oder Abwickelspule gebildet werden. Dieses Laufwerk ist mit einem seiner Ausgänge mit dem Laufzeitzähler 3 verbunden, der die Länge des abgespulten bzw. zurückgespulten Aufzeichnungsträgers zählt. Die Vorlauf- und Rücklaufsignale des Aufnahme-/Wiedergabegeräts 1 bzw. des Laufwerkes für den Aufzeichnungsträger innerhalb des Geräts 1 werden über die Impulsleitung 12 dem Laufzeitzähler 3 zugeführt und kennzeichnen den Vorlauf und den Rücklauf des Aufzeichungsträgers. Von der Impulsleitung 12 zweigt eine Leitung 13 vor dem Laufzeitzähler 3 ab, die sowohl mit einem Zwischenspeicher/ Rechner 10 als auch mit einem Drucker 6 verbunden ist. Der Zwischenspeicher/Rechner 10 numeriert fortlaufend die Informationen bei der Aufnahme, erkennt die Informationslängen zwischen zwei Markierungen und rechnet sie in Form von Einzelinformationslängen, kumulierten Informationslängen, Schreibmaschinenzeilen, Silben, Normwörter, Bedarf an Norm-Schreibseiten oder dergleichen um, die dann von dem nachgeschalteten Drucker 6 während der Aufnahme oder vor der Wiedergabe nach Beendigung des Rücklaufes des Aufzeichnungsträgers,evtl. zusammen mit der laufenden Nummer, digital ausgedruckt werden.

Eine weitere Leitung 4 verbindet das Aufnahme-/Wiedergabegerät 1 sowohl direkt mit dem Laufzeitzähler 3 als
auch über ein erstes Zeitglied 7, das während des Rücklaufes des Aufnahme-/Wiedergabegeräts 1 den Laufzeitzähler 3 entsprechend den Rücklaufsignalen zurückstellt.
Dem ersten Zeitglied 7 ist ein zweites Zeitglied 8 nachgeschaltet, das über eine Leitung 9 mit dem Aufnahme-/
Wiedergabegerät 1 verbunden ist und dieses nach dem
Zurücksetzen durch das erste Zeitglied 7 erneut startet.
Das Aufnahme-/Wiedergabegerät 1 weist einen Schalter 2 auf,
der für die Übertragung der Informationen geschlossen
wird und gleichzeitig den Rücklauf des Gerätes 1 auslöst. Der Schalter 2 ist über eine Leitung 14 an den
Drucker 6 angeschlossen, der die einzelnen Marken,
Zeichen, Markierungen oder dergleichen Informationen
bei jedem Stopp des Gerätes 1 bzw. während der Übertragung dieser Informationen ausdruckt.

Die Impulsfolge der von dem Laufwerk des Gerätes 1
dem Laufzeitzähler 3 zugeführten Impulse ist so ausgelegt, daß sie die Vorgangszeit oder die Anzahl der
Schreibmaschinenzeilen wiedergibt. Bei einem Markierungsstopp wird der Zählerstand im Zwischenspeicher/
Rechner 10 über die Leitung 5 dem Drucker 6 und über
die Leitung 13 dem Laufzeitzähler 3 zugeführt. Der
Drucker druckt daraufhin die Laufrichtung zwischen
zwei Markierungen zusammen mit dem Zählerstand aus.

Im Aufnahme-/Wiedergabegerät 1 ist beispielsweise eine
Zeituhr integriert, welche das Drucken der Gesamtaufzeichnungszeit, der Einzelaufzeichnungszeit, der Uhrzeit bei Aufzeichnungsbeginn, des Datums und dergleichen
Angaben steuert und die entsprechenden Signale zum
Ausdrucken in den Drucker 6 einspeist. Dieser kann entweder in das Aufnahme-/Wiedergabegerät 1 baulich integriert sein oder als selbständige Baueinheit ausgebildet sein, die dann als Zusatzgerät an das Aufnahme-/Wiedergabegerät 1 angeschlossen wird, beispielsweise in Form eines Adapters, der an das Gerät 1 angesteckt wird und seine Steuersignale durch das Gerät 1 erhält.

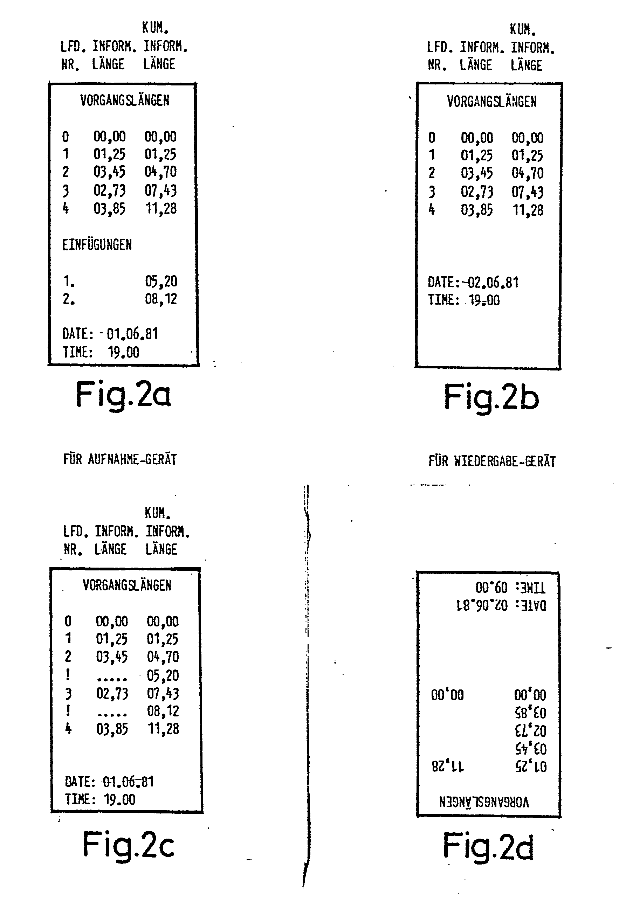

Im Drucker 6 wird beispielsweise ein Indexstreifen 15, wie er in den Figuren 2a und 2b dargestellt ist, erstellt. Auf den Indexstreifen 15 werden die Vorgangsinformationen während der Aufnahme auf dem Aufzeichnungsträger durch das Gerät 1 beispielsweise wie in der in Figur 2a gezeigten Form ausgedruckt:

| Lfd. Nr. | Informations-länge | Kumulierte Informationslänge |
|---|---|---|
| 0 | 00.00 | 00.00 |
| 1 | 01.25 | 01.25 |
| 2 | 03.45 | 04.70 |
| !. | ..... | 05.20 |
| 3 | 02.73 | 07.43 |
| ! | ..... | 08.12 |
| 4 | 03.85. | 11.28 |
| Date: | 01.06.81 | |
| Time: | 19.00 | |

In einer zweckmäßigen Ausführungsform der erfindungsgemäßen Vorrichtung können beispielsweise bis zu dreißig Informationen gespeichert werden. Selbstverständlich ist es auch möglich, eine größere odere kleinere Anzahl von Informationen zu speichern.

- 8 -

Bei einer Ausführungsform, bei der nur bei einem Stopp oder im Rücklauf gedruckt werden soll, reicht ein Speicher : mit geringer Speicherkapazität - z.B. für eine fünf- oder sechsstellige Zahl - aus.

In Figur 2b ist ein Indexstreifen 15 gezeigt, der nach erfolgter Markierungsübertragung, das heißt nach Beendigung des Rücklaufes des Aufzeichnungsträgers, jedoch vor Beginn des Wiedergabebetriebs ausgedruckt wird. Da bei dieser Betriebsweise die Informationen jeweils, wie zuvor erwähnt wurde, auf den Anfang des Aufzeichnungsträgers bezogen sind, fängt der Ausdruck auf dem Indexstreifen 15 mit dem ersten Diktat an, das im vorliegenden Fall 1.25 Einheiten umfaßt und um 19.00 Uhr beendet war:

| Lfd. Nr. | Inform.- länge | kumulierte Inform.- länge |
|----------|----------------|---------------------------|
| 0        | 00.00          | 00.00                     |
| 1.       | 01.25          | 01.25                     |
| 2.       | 03.45          | 04.70                     |
| 3.       | 02.73          | 07.43                     |
| 4.       | 03.85          | 11.28                     |
| Date:    | 01.06.81       |                           |
| Time:    | 19.00          |                           |

Erfolgt eine Markierung in der Wiedergabestellung des Gerätes 1, so bedeutet dies beispielsweise eine Einfügung, die der Diktierende an bestimmten Positionen des Aufzeichnungsträgers ausgeführt hat. Diese Einfügungen von Informationen werden dann beispielsweise mit entsprechenden Kennzeichnungen direkt nach dem Ausdruck für die Informationslängen der einzelnen Diktate ausgedruckt, so daß beispielsweise der Ausdruck nach folgendem Muster

erfolgen kann:

| Lfd. Nr. | Laufzeit |
|----------|----------|
| 1.       | 05.20    |
| 2.       | 08.12    |

Die beiden Einfügungen sind mit den laufenden Nummern 1. und 2. gekennzeichnet. Es sind in einer zweckmäßigen Ausführungsform bis zu dreißig Einfügungen möglich, jedoch kann deren Anzahl auch größer sein.

Die Arbeitsweise der Vorrichtung ist folgende:

Beim Einlegen des Aufzeichnungsträgers, beispielsweise einer Bandkassette in das Aufnahme-/Wiedergabegerät 1, erfolgt über den Kassettenkontakt bei eingeschaltetem Drucker 6 der Ausdruck von Datum und Uhrzeit, danach werden vom Laufwerk erzeugte Impulse über die Leitung 11 an den Laufzeitzähler 3 gegeben, der die Impulse analog zur Laufzeit umsetzt. Bei einer Markierung in der Aufnahmestellung des Gerätes 1 werden die Impulse in den Ausdruck für die laufende Nummer, Informationslänge, die kumulierte Informationslänge und dergleichen Angaben umgewandelt. Der jeweilige Ausdruck erfolgt stets zu dem Zeitpunkt der Markierung.

Der Ausdruck von Datum und Uhrzeit kann alternativ auch nach der Aufnahme durch einen Zusatzschalter am Drucker ausgelöst werden. Bei einer Markierung in der Wiedergabestellung des Aufnahme-/Wiedergabegerätes 1 bedeutet diese eine Einfügung, wie sie voranstehend beschrieben wurde. Für den Fall, daß sowohl die Diktatinformationen ausgedruckt werden, die beispielsweise während der Aufnahme aufgezeichnet werden, als auch die Einfügungen, die im Wiedergabebetrieb des Gerätes 1 vorgenommen wurden, erfolgen die voranstehend tabellarisch angegebenen Ausdrucke nicht exakt nach den oben angeführten Mustern, sondern vielmehr werden die Ausdrucke für die Informationslängen und für die Einfügungen in der Reihenfolge ausgedruckt, in der sie anfallen, wie es in Fig. 2c dargestellt ist.

Die zweite Betriebsmöglichkeit des Aufnahme-/Wiedergabegerätes 1 ist derart, daß alle anfallenden Informationen abgespeichert und anschließend abgerufen werden. Der Ausdruck während der Aufnahme durch das Gerät 1 erfolgt nach den zuvor angegebenen tabellarischen Mustern. Wird das Aufnahme-/Wiedergabegerät 1 auf Wiedergabebetrieb geschaltet, sind alle Informationen, die auf dem Aufzeichnungsträger gespeichert sind, vorab eingelesen und abgespeichert und stehen erst nach dem Rücklauf des Aufzeichnungsträgers für den Ausdruck auf dem Indexstreifen 15 zur Verfügung.

Alternativ können aber auch die Vorgangslängen beim Rückspulen auf dem Wiedergabegerät so ausgedruckt werden wie sie anfallen. Der Ausdruck erfolgt dann auf dem Kopf stehend, damit nach Entnahme des Indexstreifens die Information in der richtigen Reihenfolge von oben nach unten zur Verfügung steht, wie dies aus Figur 2d ersichtlich ist. Hierzu ist ein Schalter 16 im Drucker, Zwischenspeicher/Rechner oder am Aufnahme-/Wiedergabegerät angeordnet, der im geschlossenen Zustand das Aufnahme-/Wiedergabegerät 1 in den Rücklauf versetzt.

Die voranstehend beschriebene Vorrichtung ist keineswegs auf Diktiergeräte beschränkt, sondern kann beispielsweise auch als Zusatzgerät für Anrufbeantworter und Diktatsysteme verwendet werden. Neben Anwendungen

- 11 -

im gesamten Audiobereich sind auch Anwendungen im
Videobereich vorgesehen.

Rei/Co

**0075909**

ASSMANN GMBH, INDUSTRIESTRASSE 5, D-6380 BAD HOMBURG v.d.H.1

## Patentansprüche

1. Signalaufnahme- und/oder Signalwiedergabe-Gerät zur Anzeige von Informationslängen, die auf einem Aufzeichnungsträger aufgezeichnet und deren Anfang und Ende durch Marken, Zeichen, Markierungen oder dergleichen Informationen markiert sind, mit einer Abtasteinrichtung zum Abtasten des Aufzeichnungsträgers in einem Aufnahme- und/oder Wiedergabegerät und mit einer Einrichtung zum Nachweis der aufgezeichneten Signale, welche die Marken, Zeichen, Markierungen oder dergleichen Informationen darstellen,

d a d u r c h   g e k e n n z e i c h n e t ,

daß die Einrichtung einen Zwischen- Speicher/Rechner (10) und einen Drucker (6) aufweist, daß der Zwischen- Speicher/ Rechner (10) Informationen bei der Aufnahme auswertet, die Informationslängen zwischen zwei Markierungen erkennt und in Form von Einzelinformationslängen, kumulierten Informationslängen, Schreibmaschinenzeilen, Silben, Normwörter, Bedarf an Norm-Schreibseiten oder dergleichen umrechnet, die der nachgeschaltete Drucker (6) nach oder – während der Aufnahme oder vor der Wiedergabe nach Beendigung des Rücklaufes des Aufzeichnungsträgers in der richtigen Reihenfolge digital ausdruckt.

2. Gerät nach Anspruch 1,
d a d u r c h   g e k e n n z e i c h n e t ,
daß das Aufnahme-/Wiedergabegerät (1) über eine Impulsleitung (12) für die Vorlauf- und Rücklaufsignale und eine Zählimpuls-Leitung (11) mit einem Laufzeitzähler (3), der ein Vorwärts- und Rückwärtszähler ist, verbunden ist

- 2 -

und daß die Vorlauf- und Rücklaufsignale des Aufnahme-/
Wiedergabegerätes (1) über eine weitere Leitung (13),
die von der Vorlauf-/Rücklaufimpulsleitung (12) abzweigt, sowohl dem Zwischenspeicher/Rechner (10) als
auch dem Drucker (6) zuführbar sind.

3. Gerät nach den Ansprüchen 1 und 2,
d a d u r c h   g e k e n n z e i c h n e t ,
daß eine Leitung (4) das Aufnahme-/Wiedergabegerät (1)
sowohl direkt als auch über ein erstes Zeitglied (7)
mit dem Laufzeitzähler (3) verbindet, und daß das
Zeitglied (7) während des Rücklaufes des Aufnahme-/
Wiedergabegerätes (1) den Laufzeitzähler (3) entsprechend den Rücklaufsignalen zurückstellt.

4. Gerät nach Anspruch 3,
d a d u r c h   g e k e n n z e i c h n e t ,
daß dem ersten Zeitglied (7) ein zweites Zeitglied
(8) nachgeschaltet ist, das über eine Leitung (9)
mit dem Aufnahme-/Wiedergabegerät (1) verbunden ist
und dieses nach dem Zurücksetzen durch das erste
Zeitglied (7) erneut startet.

5. Gerät nach einem oder mehreren der Ansprüche
1 bis 4,
d a d u r c h   g e k e n n z e i c h n e t ,
daß das Aufnahme-/Wiedergabegerät (1) über einen
Schalter (2) in den Rücklauf versetzbar ist, und
daß der Schalter (2) über eine Leitung (14) an den
Drucker (6) angeschlossen ist, der die einzelnen
Marken, Zeichen, Markierungen oder dergleichen Informationen bei jedem Stopp bzw. während deren
Übertragung ausdruckt.

- 3 -

6. Gerät nach Anspruch 5,
d a d u r c h   g e k e n n z e i c h n e t ,
daß bei einem Markierungsstopp der Zählerstand im Zwischenspeicher/Rechner (10) über die Leitung (5) dem Drucker (6)
und über die Leitung(13) dem Laufzeitzähler (3) zugeführt
wird und daß der Drucker (6) die Laufrichtung von der
einen Markierung zu der nächsten Markierung zusammen mit
dem Zählerstand des Laufzeitzählers (3) über die Leitung
(13) eingespeist erhält und ausdruckt.

7. Gerät nach den Ansprüchen 1 bis 6,
d a d u r c h   g e k e n n z e i c h n e t ,
daß der Drucker (6) in das Aufnahme-/Wiedergabegerät (1)
baulich integriert ist.

8. Gerät nach den Ansprüchen 1 bis 6,
d a d u r c h   g e k e n n z e i c h n e t ,
daß der Drucker (6) als selbständige Baueinheit ausgebildet ist, die als Zusatzgerät an das Aufnahme-/Wiedergabegerät (1) anschließbar ist.

9. Gerät nach Anspruch 7 oder 8,
d a d u r c h   g e k e n n z e i c h n e t ,
daß der Zwischenspeicher/Rechner (10) die Gesamtaufzeichnungszeit, die Einzelaufzeichnungszeit, Uhrzeit des Aufzeichnungsbeginns, Datum und dergleichen Angaben, gesteuert
durch eine Zeituhr im Zwischenspeicher/Rechner (10) speichert
und berechnet und in den Drucker (6) zum Ausdrucken einspeist.

10. Gerät nach einem oder mehreren der Ansprüche 1 bis 9
d a d u r c h   g e k e n n z e i c h n e t ,
daß nach der Aufnahme während der anschließenden Wiedergabe durch das Aufnahme-/Wiedergabegerät (1) in die Aufzeichnung Marken, Zeichen oder dergleichen Daten einfügbar sind.

**0075909** .

– 4 –

11. Gerät nach den Ansprüchen 1 bis 10,
d a d u r c h   g e k e n n z e i c h n e t ,
daß ein Schalter (16) im Drucker, Zwischenspeicher/Rechner
oder am Aufnahme-/Wiedergabegerät (1) angeordnet ist, der
nach dem Schließen über eine Leitung (17) das Aufnahme-/
Wiedergabegerät (1) in den Rücklauf versetzt und den
Drucker und Zwischenspeicher/Rechner so steuert, daß die
Marken, Zeichen oder sonstigen Daten eingelesen werden
und nacheinander, so wie sie vom Gerät (1) her anfallen,
auf dem Kopf stehend, digital ausgedruckt werden.

## Fig.1

|  | KUM. |  |
|---|---|---|
| LFD.<br>NR. | INFORM.<br>LÄNGE | INFORM.<br>LÄNGE |

VORGANGSLÄNGEN

| 0 | 00,00 | 00,00 |
|---|---|---|
| 1 | 01,25 | 01,25 |
| 2 | 03,45 | 04,70 |
| 3 | 02,73 | 07,43 |
| 4 | 03,85 | 11,28 |

EINFÜGUNGEN

| 1. |  | 05,20 |
|---|---|---|
| 2. |  | 08,12 |

DATE: - 01.06.81
TIME:  19.00

# Fig.2a

|  | KUM. |  |
|---|---|---|
| LFD.<br>NR. | INFORM.<br>LÄNGE | INFORM.<br>LÄNGE |

VORGANGSLÄNGEN

| 0 | 00,00 | 00,00 |
|---|---|---|
| 1 | 01,25 | 01,25 |
| 2 | 03,45 | 04,70 |
| 3 | 02,73 | 07,43 |
| 4 | 03,85 | 11,28 |

DATE:~02.06.81
TIME: 19.00

# Fig.2b

FÜR AUFNAHME-GERÄT

FÜR WIEDERGABE-GERÄT

|  | KUM. |  |
|---|---|---|
| LFD.<br>NR. | INFORM.<br>LÄNGE | INFORM.<br>LÄNGE |

VORGANGSLÄNGEN

| 0 | 00,00 | 00,00 |
|---|---|---|
| 1 | 01,25 | 01,25 |
| 2 | 03,45 | 04,70 |
| ! | ..... | 05,20 |
| 3 | 02,73 | 07,43 |
| ! | ..... | 08,12 |
| 4 | 03,85 | 11,28 |

DATE: 01.06.81
TIME: 19.00

# Fig.2c

TIME: 09.00
DATE: 02.06.81

| VORGANGSLÄNGEN | | |
|---|---|---|
| 01,25 | 11,28 |  |
| 03,45 |  |  |
| 02,73 |  |  |
| 03,85 |  |  |
| 00,00 | 00,00 |  |

# Fig.2d